# EUROPEAN PATENT APPLICATION

(11) **EP 2 859 950 A1**
(43) Date of publication of application: **15.04.2015**
(21) Application number: 13188206.0
(22) Date of filing: 11.10.2013
(51) Int. Cl.: B02C 2/04, F16J 15/34

(54) **Sealing ring for gyratory crusher**

(71) Applicant: Sandvik Intellectual Property AB, 811 81 Sandviken (SE)
(72) Inventor: Henssien, Adrien, 214 34 Malmö (SE); Malmberg, Mats, SE-274 63 Rydsgård (SE)

(57) **Abstract**

A gyratory crusher sealing ring assembly having an annular body (209) with a first part (200,201) to mate against a sealing surface (110) provided at an underside region of the crusher head (100) and a second part (202) for mounting the body at a support part (112,117) axially below the head. The sealing ring is configured not to flex or bend in response to the sliding contact between the ring and the head surface. This is achieved as the ring comprises a Young's modulus (E-modulus) in the range 1700 to 4300 MPa and is substantially rigid. The ring is biased against the sealing surface of the head via a bias component (204) or region.

## Description

### Field of invention

The present invention relates to a gyratory crusher sealing ring for positioning at an underside region of the crushing head and being configured to prevent dust and debris from passing from the discharge zone to a working part zone of the crusher and in particular, although not exclusively, to a sealing ring having a Young's modulus in a range 1700 to 4300 MPa to be substantially rigid and not to flex in response to the oscillating movement of the head.

### Background art

Gyratory crushers are used for crushing ore, mineral and rock material to smaller sizes. Typically, the crusher comprises a crushing head mounted upon an elongate main shaft. A first crushing shell (typically referred to as a mantle) is mounted on the crushing head and a second crushing shell (typically referred to as a concave) is mounted on a frame such that the first and second crushing shells define together a crushing chamber through which the material to be crushed is passed. A driving device positioned at a lower region of the main shaft is configured to rotate an eccentric assembly (arranged about the shaft) to cause the crushing head to perform a gyratory pendulum movement and crush the material introduced in the crushing chamber.

Conventionally, the driving device interfaces with drive components and bearings that provide and stabilize the gyroscopic precession of the shaft and crushing head within the crusher. These working parts are typically accommodated within a working part zone that is partitioned and sealed from the crushing chamber and the discharge zone (through which crushed material passes) by a sealing assembly. The sealing assembly typically comprises a sealing ring that is retained in sealing contact against an underside surface of the crushing head. Gyratory crushers with conventional dust seals are described in GB 335,011; US 2,134,876; US 2,831,640; GB 1570015; US 4,844,362; US 5,718,391; JP 2003-284963; JP 2001-170508; and WO 2012/005651.

Typically, the sealing ring is formed as a flexible annular body so as to be capable of compression against the sealing surface of the head and to flex as the head oscillates back and forth to maintain a seal and prevent particulate contaminant from passing into the working part zone. However, such flexible sealing bodies are disadvantageous in that firstly the seal achieved is not optimised and secondly conventional sealing rings typically comprise a relatively short operational lifetime and require frequent replacement. What is required is a sealing ring that addresses these problems.

### Summary of the Invention

It is an objective of the present invention to provide a sealing ring and sealing arrangement for a gyratory crusher that is optimised to maximise the seal strength at the interface between the ring and the underside surface of the crushing head. It is a further specific objective to maximise the longevity of the sealing ring and assembly to reduce the frequency for maintenance and replacement. It is a further particular objective to provide a sealing ring that may be considered self-lubricating. It is a further objective to provide a sealing ring that is capable of being biased into sealing contact with the underside surface of the crushing head to maximise the seal strength without compromising or reducing the operational lifetime of the seal.

The objectives are achieved by providing a sealing ring and a sealing ring arrangement that comprises a stiffness, expressed as the tensile or Young's modulus, that has been found to provide a suitably high sealing strength at the underside region of the crushing head whilst significantly extending the operational lifetime of the ring over conventional *'more flexible'* sealing rings. In particular, the above objectives are achieved by providing a sealing ring that is configured not to flex or bend in response to the oscillating movement of the head and the sliding contact between a part of the sealing ring and the surface against which the ring is mated being the underside surface of the crushing head. The present sealing ring, having a specific Young's modulus, is configured to provide a number of significant advantages over the prior art. In particular, the substantially rigid sealing body acts to scrape excess oil from the sealing surface of the head to avoid undesirable loss and waste of this lubrication oil. The present sealing body is also effective to *'scrape off'* or dislodge dirt and contaminants from the sealing surface to prevent such contaminants entering the working part zone and compromising the operation of the crusher and affecting the seal strength at the head underside surface. Such scraping action is not possible with existing flexible rings that are simply deflected to *'pass-over'* contaminants or oil at the sealing surface.

The present sealing body, comprising the desired stiffness, is also compatible for use with a bias component or region that acts to bias the mating part of the sealing ring annular body against the sealing surface as the sealing surface position changes dynamically to follow the oscillating movement of the crushing head within the crushing chamber. The bias component is also advantageous to maintain the desired contact pressure at the sealing surface by compensating for a change in position of such sealing parts due to wear of at least some of the components of the machine.

According to a first aspect of the present invention there is provided a gyratory crusher sealing ring assembly for a gyratory crusher having a crushing chamber defined between an outer and an inner crushing shell with a discharge zone to allow crushed material at the crushing chamber, the inner crushing shell supported on a head mounted at a main shaft wherein a working part zone is positioned below the head and about the shaft and comprises working parts to enable the head to move gyroscopically within the crusher, the sealing ring assembly configured for positioning between the discharge zone and the working part zone and comprising: an annular body having a first part to mate against a sealing surface provided at an underside region of the head and a second part for mounting the body at a support part substantially axially below the head; **characterised in that:** the annular body comprises a Young's modulus (E-modulus) in the range 1700 to 4300 MPa and is substantially rigid being configured not to flex or bend in response to the oscillating movement of the head and sliding contact between the first part and the sealing surface; the assembly further comprising a bias component or region positioned at the annular body to apply an axial return force to urge the first part of the body into contact with the sealing surface.

Reference within the specification to the Young's modulus provides a quantitative measure of the *'stiffness'* of the present sealing ring and is calculated according to the DE standard DIN 53457.

Optionally, Young's modulus is in a range 1800 to 4200 MPa or 2000 to 4000 MPa. The present Young's modulus range is configured specifically to significantly extend the operational lifetime of the ring, to facilitate scraping removal of oil and contaminants from the sealing surface whilst not causing abrasive damage to the sealing surface during use.

Optionally, the bias component is a spring or a polymer based component. Preferably, the bias component is a spring positioned at the second part of the annular body and between the annular body and the support part of the crusher. Preferably, the spring comprises a wave spring. Preferably, the wave spring is a single turn wave spring being a gap-type or overlap type spring. Preferably, the wave spring is configured to permit radial expansion of the spring during use and during compression.

Optionally, the spring comprises anyone or a combination of the following set of: a cantilever spring; a coil or helical spring; a compression spring; a tension or extension spring; a leaf spring; a V-spring; a Belleville washer spring; a constant force spring; a gas spring; a negator spring; a spring washer; a torsion spring.

Optionally, the bias component is a cavity region fillable with a fluid capable of being pressurized to provide an expansion force to urge the first part of the body into contact with the sealing surface. Optionally, the cavity is defined by the second part of the body and a region of the support part, the second part capable of moving or sliding axially relative to the support part to change a volume of the cavity. Optionally, the fluid is a gas phase medium or a liquid phase medium such as oil. A cavity region and pressurised fluid arrangement is advantageous to utilise existing technology for the transfer of fluid to and from the cavity to selectively adjust the contact force of the sealing ring against the sealing surface.

According to one aspect of the present invention, the sealing comprises a first annular part and second annular part capable of movement axially relative to one another with the cavity region defined between the first and second parts, the cavity capable of receiving a pressurised fluid to force axial separation of the first part relative to the second part.

According to a preferred embodiment, the sealing ring comprises an annular first part and an annular second part movable axially with respect to one another and a spring positioned axially between the first and second parts, the spring capable of compression axially as the first part is compressed axially against the second part. Such an arrangement is advantageous to accommodate the spring within the annular body and to shield the spring and the sliding components of the first and second parts of the annular body from the material as it falls through the crusher.

Optionally, the support part is mounted at a bearing support positioned axially below the head. Alternatively, the support part may be formed integrally with a bearing support positioned axially below the head.

Optionally, the sealing surface is provided at an annular skirt positioned at a lower perimeter region of the head.

Optionally, the first part of the annular body comprises at least one blade projecting axially upward relative to the second part. Optionally, the first part comprises a single annular blade or a plurality of annular blades arranged and spaced apart radially at the first part of the annular body so as to contact different radial regions of the sealing surface. A multiple annular blade arrangement is advantageous to provide radially separated regions of contact with the sealing surface to reduce the likelihood of contaminant material from passing into the working part zone.

According to a second aspect of the present invention there is provided a gyratory crusher comprising a sealing ring assembly as claimed herein.

### Brief description of drawings

A specific implementation of the present invention will now be described, by way of example only, and with reference to the accompanying drawings in which:
Figure 1 is a cross sectional perspective view of a gyratory crusher main shaft and crushing head supported on a bearing and having a dust sealing ring provided in contact with an underside sealing surface of the crushing head according to a specific implementation of the present invention;
Figure 2 is a further cross sectional perspective view of a lowermost part of the crushing head, bearing and sealing assembly of figure 1;
Figure 3 is a further cross sectional perspective view of the assembly of figure 2;
Figure 4 is a cross sectional perspective view of a sealing ring of the type of figures 1 to 3 according to a further specific implementation of the present invention;
Figure 5 is a cross sectional perspective view of a sealing ring of the type of figures 1 to 3 according to a further specific implementation of the present invention;
Figure 6 is a further perspective view of the sealing ring of figure 5;
Figure 7 is a cross sectional perspective view of a sealing ring of the type of figures 1 to 3 according to a further specific implementation of the present invention;
Figure 8 is a perspective view of a wave spring forming part of the sealing ring assembly of figures 1 to 3 according to a specific implementation of the present invention.

### Detailed description of preferred embodiment of the invention

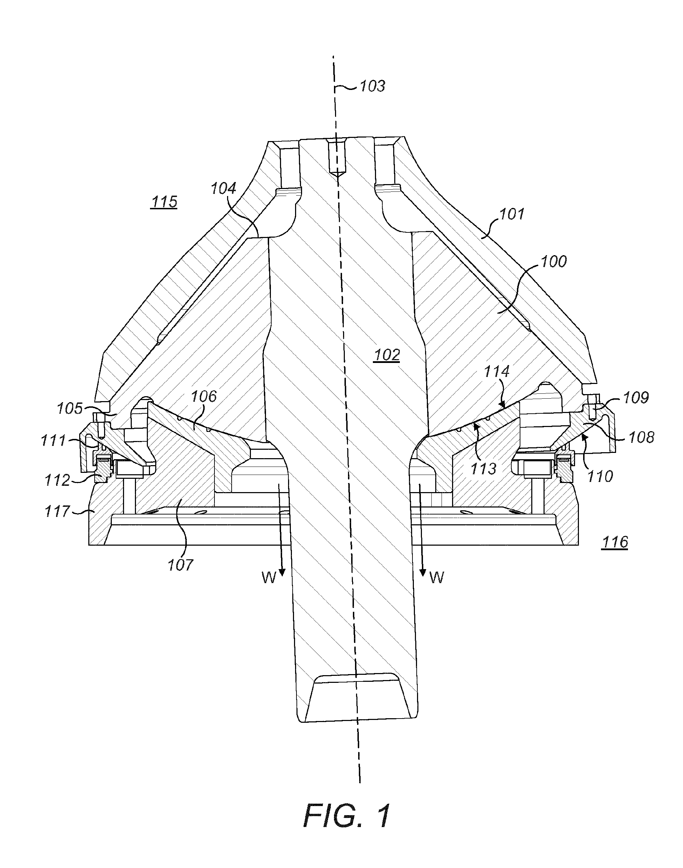

Figure 1 illustrates a perspective view of selected components of a gyratory crusher at the region of the crushing zone 115 defined within a main frame of the crusher. In particular, an elongate main shaft 102 is intended to extend longitudinally through the crusher and comprises longitudinal axis 103. A generally conical shaped crushing head 100 is mounted about shaft 102 that, in turn, mounts an inner crushing shell 101 (typically referred to as a mantle). Head 100 comprises an axially upper annular end 104 and an axially lower annular end 105. A generally dish-shaped axially lowermost surface 113 of head 100 is positioned in contact with an annular bearing 106 and in particular bearing surface 114. Bearing 106 is mounted at an annular bearing support 107 positioned axially below head 100 and bearing 106. Accordingly, head 100 and inner crushing shell 101 are capable of reciprocating gyroscopic precession as the two contact surfaces 113, 114 slide over one another during crushing operation. Material falling between the inner crushing shell 101 and outer crushing shell (not shown) attached to the crusher topshell (not shown) is thereby crushed with the crushed material falling axially downward through a discharge zone 116 (defined radially between the crusher frame and main shaft 102) and to exit the crusher for subsequent processing or stock piling.

The gyroscopic precession of head 100 is driven by a motor, suitable drive shafts and gearing (not shown) coupled to main shaft 102 axially below head 100. In particular, shaft 102 is supported at its lowermost end by a bearing assembly and associated components (not shown) located at a working part zone W positioned axially below bearing support 107. To ensure continued optimised gyroscopic movement of head 100, it is important to partition the bearing and drive components from the dust and debris laden environment of discharge zone 116. Accordingly, an annular skirt 108 is coupled to the axially lowermost annular end 105 of head 100 via a plurality of attachment bolts 109 received at appropriate threaded bores 109. Skirt 108 comprises an axially downward facing sealing surface 110 that extends tangentially to axis 103. A sealing ring assembly is positioned axially between a radially outermost region 117 of bearing support 107 and skirt sealing surface 110. Sealing ring assembly comprises a sealing ring annular first part 111 positioned in contact with skirt surface 110 and a annular second part 112 positioned in contact with support region 117. Accordingly, sealing ring assembly 111, 112 provides a partition to prevent dust and contaminant from passing radially and axially from the crushing and discharge zone 115, 116 to the working part zone W that surrounds the lower region of the main shaft 102 axially below the bearing support 107.

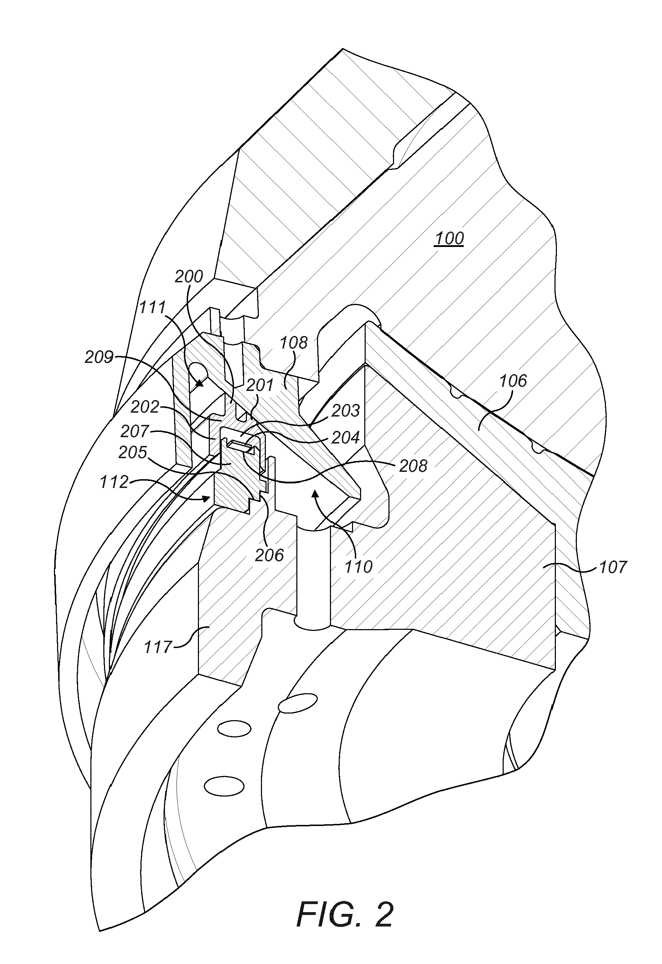

Referring to figure 2, the annular first part 111 comprises a radially outer annular blade 200 and a radially inner annular blade 201, the axially uppermost ends of which are positioned in contact with skirt surface 110. Each blade 200, 201 is mounted at an annular body 209. A pair of opposed annular flanges 202 extend axially downward from body 209 and are radially spaced from one another to create an annular gap region 203 extending radially between flanges 202 and axially below body 209.

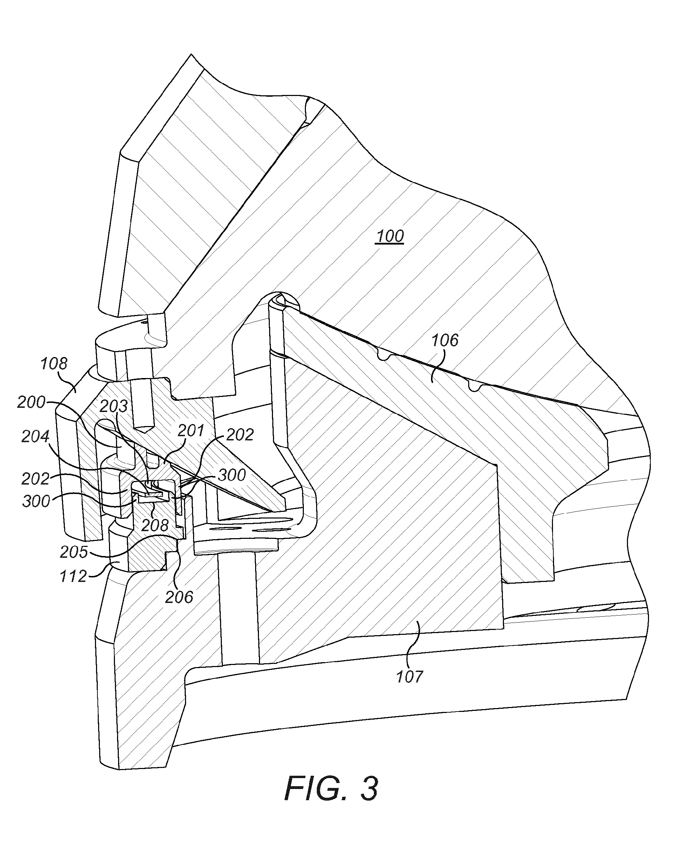

The second annular part 112 also comprises a main body 207 having an annular step region 206 formed at a radially inner and axially lower region configured to mate against a corresponding step region 205 provided at an axially upper section of support region 117. Referring to figure 3, body 207 comprises a pair of annular lips 300 that are spaced apart radially to create a complementary gap region 208 positioned radially between annular lips 300 and axially above body 207. A radial separation length of lips 300 is less than the corresponding separation distance of flanges 202 such that flanges 202 extend over the side surfaces of lips 300. Accordingly, the first and axially upper sealing part 111 partially overlaps and encompasses the lips 300 and body 207 of the second sealing part 112. In particular, gap regions 203, 208 are collocated to create a single annular gap positioned axially and radially between the first and second sealing parts 111, 112. According to the specific implementation, a wave spring 204 is accommodated within gap region 203, 208 to extend substantially the full circumferential length axially between the first and second sealing parts 111, 112.

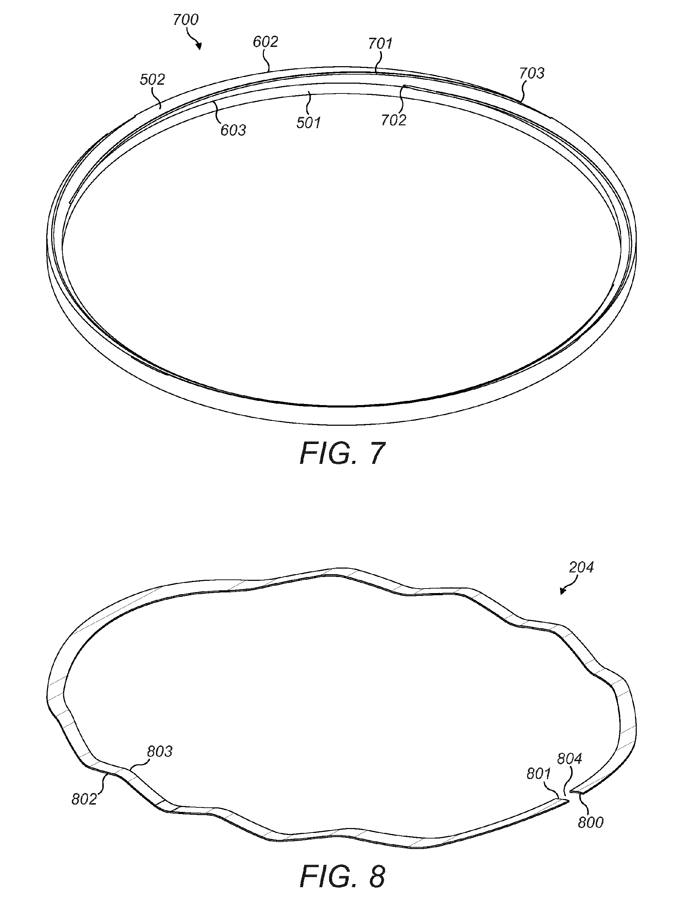

Wave spring 204 is further illustrated with reference to figure 8. In particular, spring 204 comprises a strip-like body formed generally into an annulus in which the ends of the strip 800, 801 are positioned opposed to one another and separated by a small gap 804. The annular length of spring 204 follows a wave-like configuration having peaks 803 and troughs 802 that follow an alternating sequence in the circumferential direction between edges 800, 801. Spring 204 is configured to be resistant to compression and in particular to apply a return bias force to the first sealing part 111 when it is axially compressed against second sealing part 112. Accordingly, wave spring 204 is configured to contact the axially underside surface of first part body 209 and the axially upward facing surface of the second part body 207 between the respective flanges 202 and lips 300. Wave spring 204 is effective to apply a desired contact pressure between blades 200, 201 and skirt sealing surface 110. This is advantageous to ensure the seal integrity is maintained dynamically as the skirt 108 follows the gyroscopic precession of head 100 relative to bearing 106 and bearing support 107.

According to the specific implementation, the sealing assembly first part 111 comprises a material of sufficient stiffness to enable blades 200, 201 to provide a scraping effect at surface 110 to remove dirt, dust and contaminants from the radially outer region of surface 110 and prevent such contaminant from passing radially and axially into the working part zone W from the discharge zone 116. The substantially rigid blades 200, 201 are further advantageous to scrape excess oil from surface 110 so as to contain the oil at the radially inner region of surface 110. This has been found to both reduce oil loss during use and to ensure a desired lubricated surface is maintained. According to the specific implementation, a stiffness of part 111 and in particular blades 200, 201 may be expressed as the Young's modulus range 1700 to 4300 MPa and in particular 2000 to 4000 MPa. A suitable material of sealing ring part 111 comprises a polyamide or a polyamide based compound. Accordingly, blades 200, 201 are configured not to flex or bend appreciably during mated and sliding contact with surface 110. The longevity of sealing ring part 111 is therefore increased relative to conventional flexible sealing rings that deform in response to this sliding contact.

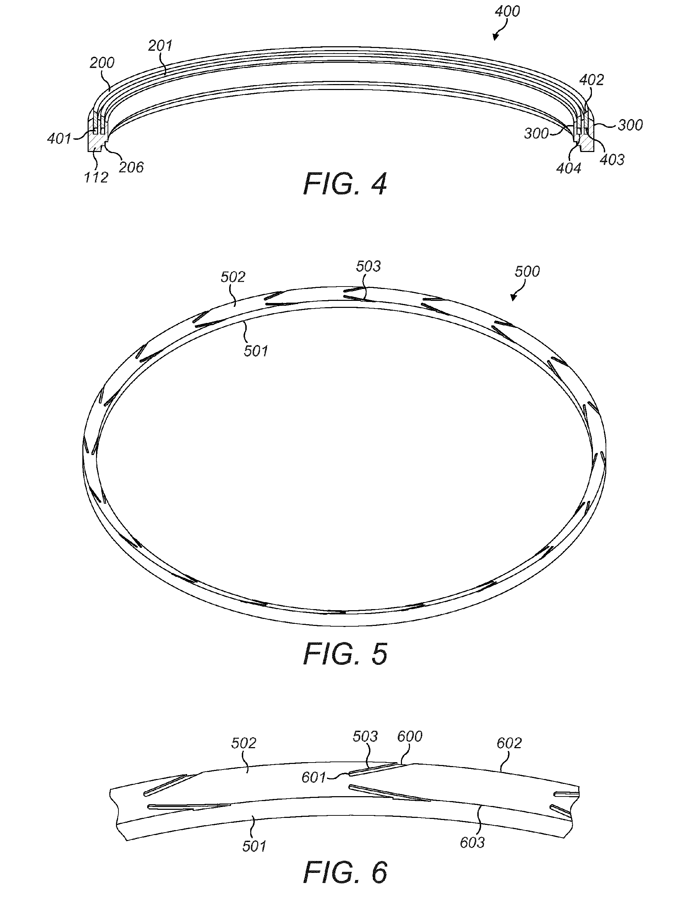

Figure 4 illustrates a further embodiment of the sealing ring assembly 400. According to the further embodiment, the first and second blades 200, 201 are formed as independent first part bodies each supported directly by the second part 112. In particular, an axially upper region of second part 112 comprises a plurality of annular lips 300 spaced apart radially to define annular recesses 401 into which are mounted the respective blades 200, 201. Each blade comprises an axially uppermost end surface 402 (first part) and an opposed axially downward end surface 403 (second part). Each blade 200, 201 is at least partially accommodated within each annular recess 401 such that the lowermost end surface 403 is positioned opposed to a trough 404 of each recess 401. Although not illustrated in figure 4, a bias component, such as a leaf spring or a pressurised fluid may occupy each recess 401 axially between each blade 200, 201 and each trough 404. Accordingly, each blade 200, 201 may be biased relative to second part 112 and into contact with sealing surface 110.

According to further embodiments, the wave spring 204 of figures 1 to 3 may be replaced with a pressurised fluid configured to be introduced and removed at gap region 203, 208 so as to provide a means of controlling the axial movement of the first part 111 relative to the second part 112. Such an embodiment typically comprises a fluid reservoir, sealing gasket, fluid conduits and valves as will be appreciated by those skilled in the art to allow transfer of the fluid to and from the annular gap region 203, 208.

Figure 5 illustrates a further specific embodiment of the first sealing part 111 in which an annular ring 500 comprises an annular body 501 having an axially uppermost contact surface 502. A plurality of grooves 503 are indented on surface 502. The grooves 503 are arranged in pairs and distributed circumferentially around body 501 such that a first groove extends from a radially outer perimeter edge 602 and comprises a radially outer end 600 and a radially inner end 601. A corresponding groove extends as a mirror image of the radially outer groove from innermost annular edge 603.

Figure 7 illustrates a further embodiment of sealing part 111 in the form of an annular ring 700 formed from a main body 501 and having a corresponding contact surface 502. A plurality of grooves 701 are formed in surface 502 and are shaped as a section of a spiral so as to arc smoothly from radially outer perimeter edge 602 to radially inner annular edge 603. That is, a first end 703 of groove 701 is positioned at edge 602 whilst an inner end 702 of groove 701 is positioned at inner edge 603. According to the specific implementation, the respective outer and inner ends 703, 702 of neighbouring groove 701 overlap in a circumferential direction at surface 502.

## Claims

1. A gyratory crusher sealing ring assembly for a gyratory crusher having a crushing chamber defined between an outer and an inner (101) crushing shell with a discharge zone (116) to allow crushed material at the crushing chamber, the inner crushing shell (101) supported on a head (100) mounted at a main shaft (102) wherein a working part zone (W) is positioned below the head (100) and about the shaft (102) and comprises working parts to enable the head (100) to move gyroscopically within the crusher, the sealing ring assembly configured for positioning between the discharge zone (116) and the working part zone (W) and comprising:
an annular body (209) having a first part (200, 201) to mate against a sealing surface provided at an underside region of the head (100) and a second part (202) for mounting the body (209) at a support part (112, 117) substantially axially below the head (100);
**characterised in that:**
the annular body (209) comprises a Young's modulus (E-modulus) in the range 1700 to 4300 MPa and is substantially rigid being configured not to flex or bend in response to the oscillating movement of the head (100) and sliding contact between the first part (200, 201) and the sealing surface (110);
the crusher further comprising a bias component (204) or region positioned at the annular body (209) to apply an axial return force to urge the first part (200, 201) of the body (209) into contact with the sealing surface (110).

2. The ring as claimed in claim 1 wherein the annular body (209) comprises a Young's modulus (E-modulus) in the range 1800 to 4200 MPa.

3. The ring as claimed in claim 2 wherein the Young's modulus is in a range 2000 to 4000 MPa.

4. The ring as claimed in claim 3 wherein the bias component (204) is a spring or a polymer based component.

5. The ring as claimed in claim 4 wherein the spring comprises a wave spring.

6. The ring as claimed in claim 4 wherein the spring comprises anyone or a combination of the following set of:
• a cantilever spring;
• a coil or helical spring;
• a compression spring;
• a tension or extension spring;
• a leaf spring;
• a V-spring;
• a Belleville washer spring;
• a constant force spring;
• a gas spring;
• a negator spring;
• a spring washer;
• a torsion spring.

7. The ring as claimed in any one of claims 1 to 3 wherein the bias component (204) is a cavity region (203, 208) fillable with a fluid capable of being pressurized to provide an expansion force to urge the first part (200, 201) of the body (209) into contact with the sealing surface (110).

8. The ring as claimed in claim 7 wherein the cavity (203, 208) is defined by the second part (202) of the body (209) and a region (300) of the support part (112, 117), the second part (202) capable of moving or sliding axially relative to the support part (112, 117) to change a volume of the cavity (203, 208).

9. The ring as claimed in any preceding claim wherein the support part (112, 117) is mounted at a bearing support (107) positioned axially below the head (100).

10. The ring as claimed in any one of claims 1 to 8 wherein the support part (112, 117) is formed integrally with a bearing support (107) positioned axially below the head (100).

11. The ring as claimed in any preceding claim wherein the sealing surface (110) is provided at an annular skirt (108) positioned at a lower perimeter region of the head (100).

12. The ring as claimed in any preceding claim wherein the first part (200, 201) of the annular body (209) comprises at least one blade projecting axially upward relative to the second part.

13. The ring as claimed in claim 12 comprising a single annular blade.

14. The ring as claimed in claim 12 comprising a plurality of annular blades arranged and spaced apart radially at the first part (200, 201) of the annular body (209) so as to contact different radial regions of the sealing surface (110).

15. A gyratory crusher comprising a sealing ring assembly as claimed in any preceding claim.
